# EUROPÄISCHE PATENTANMELDUNG

(11) **EP 3 725 472 A1**
(43) Veröffentlichungstag der Anmeldung: **21.10.2020**
(21) Anmeldenummer: 19169506.3
(22) Anmeldetag: 16.04.2019
(51) Int. Cl.: B25J 9/16

(54) **VERFAHREN ZUM ERMITTELN EINER TRAJEKTORIE EINES ROBOTERS**

(71) Anmelder: Siemens Aktiengesellschaft, 80333 München (DE)
(72) Erfinder: Meister, Philine, 85051 Ingolstadt (DE); Neubauer, Werner, 81739 München (DE); Wurm, Kai, 81739 München (DE)

(57) **Zusammenfassung**

Die Erfindung betrifft ein Verfahren zum Ermitteln einer Trajektorie eines Roboters von einer Startposition zu einer Zielposition. Die Startposition und die Zielposition werden manuell von einem Nutzer in einer realen Umgebung des Roboters festgelegt. Es erfolgt dann ein Ermitteln einer kollisionsfreien Trajektorie des Roboters von der Startposition zu der Zielposition basierend auf einer Umgebung des Roboters.

Die Erfindung betrifft weiter eine Vorrichtung, ein Robotersystem, ein Computerprogramm sowie ein maschinenlesbares Speichermedium.

## Beschreibung

Die Erfindung betrifft ein Verfahren zum Ermitteln einer Trajektorie eines Roboters von einer Startposition zu einer Zielposition. Die Erfindung betrifft weiter eine Vorrichtung, ein Robotersystem, ein Computerprogramm und ein maschinenlesbares Speichermedium.

Es ist bekannt, eine Trajektorie eines Roboters von einer Startposition zu einer Zielposition komplett manuell anzulernen. Hierbei wird der Roboter in eine Startposition und in eine Zielposition gefahren, wobei jeweils anschließend ein Nutzer durch eine Eingabe vorgibt, dass es sich hier um die Start- respektive Zielposition handelt.

Eine Trajektorie zwischen dieser Startposition und dieser Zielposition wird dann mittels des Nutzers manuell über mehrere Zwischenpositionen festgelegt. Das heißt, dass der Nutzer den Roboter in mehrere Zwischenpositionen verfährt, die auf einer gewünschten Trajektorie liegen. Nach jedem Anfahren in eine Zwischenposition ist vorgesehen, dass der Nutzer wieder manuell über eine Eingabe dem Roboter vorgibt, dass diese Position anzufahren ist.

Der Roboter wird dann anschließend die so angelernten Zwischenpositionen nacheinander anfahren, indem er zwischen zwei Zwischenpositionen eine geradlinige Bewegung durchführt.

Hierbei muss der Nutzer selbst die Trajektorie zwischen der Startposition und der Zielposition ermitteln und festlegen. Es findet keine computerimplementierte Berechnung der Trajektorie unter Verwendung eines Umgebungsmodells statt.

Weiter ist es bekannt, eine Umgebung des Roboters zu simulieren. In einer solch simulierten Umgebung legt ein Nutzer eine Start- und eine Zielposition fest. Eine Trajektorie zwischen dieser Startposition und dieser Zielposition in der simulierten Umgebung wird dann computerimplementiert berechnet.

Die der Erfindung zugrunde liegende Aufgabe ist darin zu sehen, ein Konzept zum effizienten Ermitteln einer Trajektorie eines Roboters von einer Startposition zu einer Zielposition bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Ermitteln einer Trajektorie eines Roboters von einer Startposition zu einer Zielposition bereitgestellt, umfassend die folgenden Schritte:
Empfangen von ersten Nutzereingabesignalen, welche eine erste Nutzereingabe zu einem ersten Zeitpunkt repräsentieren, dass eine erste momentane Position des Roboters zu dem ersten Zeitpunkt als eine Startposition gespeichert werden soll, Speichern der ersten momentanen Position des Roboters als eine Startposition ansprechend auf das Empfangen der ersten Nutzereingabesignale,
Empfangen von zweiten Nutzereingabesignalen, welche eine zweite Nutzereingabe zu einem zweiten Zeitpunkt, welcher verschieden von dem ersten Zeitpunkt ist, repräsentieren, dass eine zweite momentane Position des Roboters zu dem zweiten Zeitpunkt als eine Zielposition gespeichert werden soll, Speichern der zweiten momentanen Position des Roboters als eine Zielposition ansprechend auf das Empfangen der zweiten Nutzereingabesignale,
Empfangen von Umgebungssignalen, welche eine Umgebung des Roboters repräsentieren, und
Ermitteln einer kollisionsfreien Trajektorie des Roboters von der gespeicherten Startposition zu der gespeicherten Zielposition basierend auf der Umgebung des Roboters.

Nach einem zweiten Aspekt wird eine Vorrichtung bereitgestellt, welche eingerichtet ist, alle Schritte des Verfahrens nach dem ersten Aspekt auszuführen.

Gemäß einem dritten Aspekt wird ein Robotersystem bereitgestellt, welches einen Roboter und die Vorrichtung nach dem zweiten Aspekt umfasst.

Nach einem vierten Aspekt wird ein Computerprogramm bereitgestellt, welches Befehle umfasst, die bei Ausführung des Computerprogramms durch einen Computer diesen veranlassen, ein Verfahren gemäß dem ersten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis, dass die obige Aufgabe dadurch gelöst werden kann, dass der Nutzer über eine Nutzereingabe sowohl die Startposition als auch die Zielposition in der realen Umgebung des Roboters festlegt.

Eine Trajektorie zwischen der Startposition und der Zielposition wird dann automatisch ermittelt, wobei hierbei die Umgebung des Roboters berücksichtigt wird, um eine kollisionsfreie Trajektorie von der Startposition zu der Zielposition zu ermitteln.

Das heißt also, dass gemäß dem hier beschriebenen Konzept insbesondere vorgesehen ist, dass ein Nutzer den Roboter an eine erste Position fährt, wobei der Nutzer dann über eine erste Nutzereingabe festlegt, dass es sich bei dieser ersten Position entweder um die Startposition oder die Zielposition handelt.

Weiter ist insbesondere vorgesehen, dass der Nutzer den Roboter in eine zweite Position verfährt. Dann wiederum führt der Nutzer eine zweite Nutzereingabe durch, um festzulegen, dass es sich bei dieser zweiten Position um die Zielposition oder die Startposition handelt.

Es ist also nicht vorgesehen, dass der Nutzer in einer simulierten Umgebung die Startposition und die Zielposition festlegt. Das Festlegen der Start- und der Zielposition wird also in der realen Umgebung des Roboters durchgeführt. Die Start- und die Zielposition sind also reale Positionen.

Das Ermitteln der Trajektorie von der Startposition zu der Zielposition hingegen muss nicht mehr durch den Nutzer durchgeführt werden. Vielmehr wird dieses Ermitteln computerimplementiert durchgeführt. Das heißt also, dass dieses Ermitteln ohne Zutun des Nutzers durchgeführt werden kann.

Somit werden einige Teilaspekte der in der Beschreibungseinleitung beschriebenen Vorgehensweisen in synergetischer Weise miteinander kombiniert. Es werden sich sozusagen die Vorteile beider Vorgehensweisen herausgepickt, sodass das Beste aus beiden Vorgehensweisen in synergetischer Weise vereint wird: zum einen das computerimplementierte automatische Ermitteln einer kollisionsfreien Trajektorie von einer Startposition zu einer Zielposition. Zum anderen das einfache Festlegen der Startposition und der Zielposition in der realen Welt. Der Nutzer muss somit zum Beispiel in vorteilhafter Weise keine Kenntnisse aufweisen, wie ein Computerprogramm zum Ermitteln einer Trajektorie bedient werden muss.

Es reicht, dass der Nutzer den Roboter an die entsprechenden Positionen fährt, um anschließend durch eine simple Nutzereingabe festzulegen, dass es sich hier um die Startposition respektive Zielposition handelt.

Weiter wird zum Beispiel der technische Vorteil bewirkt, dass das Anlernen einer Trajektorie effizient, komfortabel und schnell durchgeführt werden kann.

Somit wird insbesondere der technische Vorteil bewirkt, dass ein Konzept zum effizienten Ermitteln einer Trajektorie eines Roboters von einer Startposition zu einer Zielposition bereitgestellt ist.

Die Umgebung des Roboters, welche durch die Umgebungssignale repräsentiert wird, ist z.B. eine reale Umgebung, eine simulierte bzw. virtuelle Umgebung oder eine kombinierte reale/simulierte virtuelle (simulierte) Umgebung.

Eine virtuelle oder simulierte Umgebung des Roboters ist z.B. durch eine CAD-Umgebung ermittelt.

Eine reale Umgebung des Roboters ist z.B. unter Verwendung von einem oder mehreren Umfeldsensoren ermittelt. Das heißt also, dass mittels eines solchen Umfeldsensors oder mittels mehrerer solcher Umfeldsensoren eine Umgebung des Roboters sensorisch erfasst wird, wobei basierend auf der entsprechenden Erfassung eine reale Umgebung des Roboters ermittelt wird.

Ein Umfeldsensor ist z.B. einer der folgenden Umfeldsensoren: Radarsensor, Ultraschallsensor, Videosensor, Lidarsensor oder Magnetfeldsensor.

In einer kombinierten realen/virtuellen Umgebung des Roboters sind insbesondere ein oder mehrere Elemente der Umgebung simuliert und sind insbesondere ein oder mehrere Elemente der Umgebung real, d.h. insbesondere unter Verwendung eines oder mehrerer Umfeldsensoren erfasst.

In einer Ausführungsform ist vorgesehen, dass dritte Nutzereingabesignale empfangen werden, welche eine dritte Nutzereingabe zu einem dritten Zeitpunkt repräsentieren, dass eine dritte momentane Position des Roboters zu dem dritten Zeitpunkt als eine Zwischenposition gespeichert werden soll, wobei der dritte Zeitpunkt verschieden von dem ersten Zeitpunkt und verschieden von dem zweiten Zeitpunkt ist, wobei die dritte momentane Position des Roboters zu dem dritten Zeitpunkt gespeichert wird ansprechend auf das Empfangen der dritten Nutzereingabesignale, wobei die Trajektorie basierend auf der gespeicherten Zwischenposition derart ermittelt wird, dass die gespeicherte Zwischenposition auf der Trajektorie liegt.

Dadurch wird z.B. der technische Vorteil bewirkt, dass die Trajektorie effizient ermittelt werden kann. Insbesondere wird dadurch der technische Vorteil bewirkt, dass der Nutzer effizient eine oder mehrere Zwischenpositionen festlegen kann, welche vom Roboter angefahren werden sollen.

In einer Ausführungsform ist vorgesehen, dass Trajektoriensignale erzeugt und ausgegeben werden, welche die ermittelte kollisionsfreie Trajektorie repräsentieren.

Dadurch wird z.B. der technische Vorteil bewirkt, dass die ermittelte Trajektorie effizient bereitgestellt werden kann.

Nach einer Ausführungsform ist vorgesehen, dass mehrere kollisionsfreie Trajektorien des Roboters von der gespeicherten Startposition zu der gespeicherten Zielposition basierend auf der Umgebung des Roboters ermittelt werden.

Ausführungsformen, die sich auf eine kollisionsfreie Trajektorie beziehen, gelten analog für mehrere kollisionsfreie Trajektorien und umgekehrt. Das heißt also, dass, wenn "Trajektorie" im Singular steht, stets der Plural und umgekehrt mitgelesen werden soll. Ausführungen, die im Zusammenhang mit einer Trajektorie gemacht sind, gelten analog für mehrere Trajektorien und umgekehrt.

Gleiches gilt in analoger Weise für die Zwischenposition. Das heißt also, dass gemäß einer Ausführungsform vorgesehen ist, dass mehrere Zwischenpositionen auf der ermittelten Trajektorie liegen sollen. Entsprechend ist dann z.B. vorgesehen, dass vierte, fünfte und insbesondere beliebig weitere Nutzereingabesignale empfangen werden, welche eine vierte, fünfte und beliebige entsprechende weitere Nutzereingaben zu einem entsprechenden Zeitpunkt repräsentieren, dass eine entsprechend momentane Position des Roboters zu dem entsprechenden Zeitpunkt als eine entsprechende Zwischenposition gespeichert werden soll.

Gemäß einer Ausführungsform ist vorgesehen, dass basierend auf der ermittelten Trajektorie und basierend auf einer vorgegebenen Maximalgeschwindigkeit Robotersteuersignale zum Steuern des Roboters derart erzeugt und ausgegeben werden, dass bei einem Steuern des Roboters basierend auf den Robotersteuersignalen der Roboter sich von der Startposition zu der Zielposition entlang der ermittelten Trajektorie mit der vorgegebenen Maximalgeschwindigkeit bewegt.

Dadurch wird z.B. der technische Vorteil bewirkt, dass die ermittelte Trajektorie in der realen Umgebung effizient mittels eines Nutzers überprüft werden kann. Dadurch, dass sich hierbei der Roboter nur mit der vorgegebenen Maximalgeschwindigkeit bewegt, wird in vorteilhafter Weise bewirkt, dass eine Sicherheit effizient erhöht werden kann. Sofern z.B. die ermittelte Trajektorie fehlerhaft sein sollte, kann bei einer eventuellen Kollision durch die vorgegebene Maximalgeschwindigkeit eine Kollisionsschwere effizient verringert werden.

Eine vorgegebene Maximalgeschwindigkeit beträgt z.B. 25 cm/s, beispielsweise 3,3 cm/s, beispielsweise 5 cm/s, beispielsweise von kleiner oder kleiner-gleich 5 cm/s.

Für bewegte Teile in automatisierten Fertigungssystemen, also vorliegend für den Roboter, insbesondere für die einzelnen Gelenke des Roboters, sieht VDI 2854 eine "sicher" reduzierte Geschwindigkeit bei gefahrbringenden Bewegungen ohne Quetsch- und Schergefahr (durch Anstoßen) von maximal 25 cm/s und bei gefahrbringenden Bewegungen mit Quetsch- und Schergefahr von maximal 3,3 cm/s vor. Die Rückstellgeschwindigkeit von kraftbetriebenen, trennenden Schutzeinrichtungen soll <=5 cm/s betragen (DIN EN 12203).

Durch das Vorgeben einer entsprechenden Maximalgeschwindigkeit wird insbesondere der technische Vorteil bewirkt, dass die einschlägigen Normen eingehalten werden können.

Nach einer Ausführungsform ist vorgesehen, dass basierend auf der ermittelten Trajektorie und basierend auf der Umgebung des Roboters Anzeigesteuersignale derart erzeugt und ausgegeben werden, dass bei einem Steuern einer Anzeigeeinrichtung basierend auf den Anzeigesteuersignalen die ermittelte Trajektorie mittels der Anzeigeeinrichtung gemeinsam mit der Umgebung des Roboters angezeigt wird.

Dadurch wird z.B. der technische Vorteil bewirkt, dass die ermittelte Trajektorie effizient überprüft werden kann. Gemäß dieser Ausführungsform ist also vorgesehen, dass die ermittelte Trajektorie einem Nutzer angezeigt wird, sodass der Nutzer diese visuell effizient überprüfen kann.

Eine Anzeigeeinrichtung umfasst gemäß einer Ausführungsform einen oder mehrere Bildschirme.

Ein Bildschirm ist z.B. ein berührungssensitiver Bildschirm auf Englisch "Touchscreen" genannt.

Ein Bildschirm ist beispielsweise von einem Endgerät, beispielsweise einem mobilen Endgerät, beispielsweise einem Smartphone oder einem Tablet, umfasst.

Das heißt also, dass der Nutzer z.B. unter Verwendung seines mobilen Endgeräts die ermittelte Trajektorie überprüfen kann.

Dass die ermittelte Trajektorie mittels der Anzeigeeinrichtung gemeinsam mit der Umgebung des Roboters angezeigt wird, bewirkt in vorteilhafter Weise den technischen Effekt, dass die ermittelte Trajektorie effizient dahingehend überprüft werden kann, ob es eventuell zu einer Kollision des Roboters mit einem Element der Umgebung kommen kann, ohne dass hierbei in der realen Welt eine Kollision des Roboters mit diesem Element oder Objekt stattfinden wird.

Das Anzeigen der ermittelten Trajektorie gemeinsam mit der Umgebung ist hier insbesondere im Sinne einer "Augmented Reality", also einer erweiterten Realität, zu verstehen.

Nach einer Ausführungsform ist vorgesehen, dass Randbedingungssignale empfangen werden, welche eine Randbedingung für die zu ermittelnde Trajektorie repräsentieren, wobei die Trajektorie basierend auf der Randbedingung ermittelt wird.

Dadurch wird z.B. der technische Vorteil bewirkt, dass die Trajektorie effizient ermittelt werden kann. Insbesondere wird dadurch der technische Vorteil bewirkt, dass der Nutzer Einfluss auf die zu ermittelnde Trajektorie effizient nehmen kann.

Eine Randbedingung legt zum Beispiel eine Lage bzw. Pose des Roboters und/oder eines Greifers des Roboters, eine Orientierung des Roboters und/oder eines Greifers des Roboters in einer bestimmten Position bzw. während einer Bewegung entlang der zu ermittelnden Trajektorie fest.

Nach einer Ausführungsform ist vorgesehen, dass, wenn keine Trajektorie ermittelt werden kann, welche die Randbedingung erfüllt, die Randbedingung derart angepasst wird, dass eine Trajektorie ermittelt werden kann, welche die angepasste Randbedingung erfüllt, so dass die Trajektorie basierend auf der angepassten Randbedingung ermittelt wird.

Dadurch wird z.B. der technische Vorteil bewirkt, dass auch dann eine Trajektorie ermittelt werden kann, wenn zunächst die Randbedingung nicht erfüllt werden kann.

Eine einzuhaltende Randbedingung kann zum Beispiel ein Bereich sein, in den der Roboter nicht einfahren darf. Eine andere Randbedingung kann sein, dass eine bestimmte Orientierung des Greifers eingehalten werden muss. Beide Randbedingungen können dann weniger restriktiv sein.

Das Anpassen einer Randbedingung bedeutet also z.B., dass die beiden vorgenannten Randbedingungen weniger restriktiv sind.

Ausführungen, die im Zusammenhang mit einer Randbedingung gemacht sind, gelten analog für mehrere Randbedingungen und umgekehrt. Das heißt also, dass, wenn "Randbedingung" im Singular steht, stets der Plural und umgekehrt mitgelesen werden soll. Bei mehreren Randbedingungen sind diese beispielsweise unterschiedlich.

Nach einer Ausführungsform ist vorgesehen, dass bei mehreren Randbedingungen diese unterschiedlich gewichtet werden, wobei die jeweilige Gewichtung angibt, ob, und wenn ja, in welcher Reihenfolge die entsprechende Randbedingung angepasst werden darf.

Nach einer Ausführungsform ist vorgesehen, dass bei mehreren Randbedingungen Hinweissignale ausgegeben werden, welche einen Hinweis repräsentieren, welche der Randbedingungen angepasst wurde.

Dadurch wird zum Beispiel der technische Vorteil bewirkt, dass der Nutzer effizient in die Lage versetzt wird, anschließend zu entscheiden, ob er mit der entsprechenden Anpassung einverstanden ist oder nicht.

Gemäß einer Ausführungsform ist vorgesehen, dass mehrere kollisionsfreie Trajektorien ermittelt werden, welche jeweils eine kürzeste Trajektorie und/oder eine schnellste Trajektorie und/oder eine gleichmäßigste Trajektorie von der Startposition zu der Zielposition umfassen.

Dadurch wird z.B. der technische Vorteil bewirkt, dass dem Nutzer eine Auswahl an möglichen kollisionsfreien Trajektorien effizient zur Verfügung gestellt werden kann. Der Nutzer kann also auswählen, ob er die kürzeste Trajektorie, die schnellste oder die gleichmäßigste Trajektorie haben möchte.

Unter einer gleichmäßigsten Trajektorie versteht der Fachmann eine energieoptimale Trajektorie, also eine Trajektorie, welche einen geringsten Energieverbrauch aufweist, was wiederum auch geringe Beschleunigungsänderungen ("gleichmäßigste Trajektorie") umfasst.

"Gleichmäßigste Trajektorie" ist hier insbesondere in Relation zu einer zeitoptimalen Trajektorie ("schnellste Trajektorie") zu sehen, welche die schnellste Trajektorie ist und starke Beschleunigungsänderungen aufweist, was einen größeren mechanischen Verschleiß bedeuten kann.

"Gleichmäßigste Trajektorie" ist hier insbesondere in Relation zu einer geometrisch kürzesten Trajektorie zu sehen ("kürzeste Trajektorie").

Gemäß einer Ausführungsform ist vorgesehen, dass Roboterparametersignale empfangen werden, welche einen Roboterparameter eines weiteren Roboters in der Umgebung des Roboters repräsentieren, wobei die Trajektorie basierend auf dem Roboterparameter ermittelt wird, wobei der Roboterparameter ein Element ausgewählt aus der folgenden Gruppe von Roboterparametern ist: weitere Startposition einer weiteren Trajektorie des weiteren Roboters, weitere Zielposition einer weiteren Trajektorie des weiteren Roboters, weitere Trajektorie des weiteren Roboters von einer weiteren Startposition zu einer weiteren Zielposition, Abmessung des weiteren Roboters, Kontur des weiteren Roboters.

Dadurch wird z.B. der technische Vorteil bewirkt, dass die Existenz eines weiteren Roboters in der Umgebung des Roboters bei dem Ermitteln der kollisionsfreien Trajektorie effizient berücksichtigt werden kann.

Gemäß einer Ausführungsform ist vorgesehen, dass das Verfahren mittels der Vorrichtung aus- oder durchgeführt wird.

Vorrichtungsmerkmale ergeben sich analog aus entsprechenden Verfahrensmerkmalen und umgekehrt. Das heißt also insbesondere, dass sich technische Funktionalitäten des Verfahrens analog aus entsprechenden technischen Funktionalitäten der Vorrichtung und umgekehrt ergeben.

Die Formulierung "bzw." steht insbesondere für die Formulierung "respektive", welche insbesondere für "und/oder" steht.

Ein Roboter umfasst gemäß einer Ausführungsform einen oder mehrere Roboterarme, die jeweils mittels eines Gelenks gelenkig untereinander verbunden sind.

Ein Roboter umfasst gemäß einer Ausführungsform einen oder mehrere Greifer.

Das Ermitteln der kollisionsfreien Trajektorie von der Startposition in die Zielposition umfasst insbesondere, dass für jeden der Roboterarme eine eigene kollisionsfreie Untertrajektorie ermittelt wird.

Das Ermitteln der kollisionsfreien Trajektorie von der Startposition in die Zielposition umfasst insbesondere, dass für jeden der Greifer eine eigene kollisionsfreie Untertrajektorie ermittelt wird.

Zum Erfassen der entsprechenden Nutzereingabe ist gemäß einer Ausführungsform eine Mensch-Maschinen-Schnittstelle oder sind gemäß einer Ausführungsform mehrere Mensch-Maschinen-Schnittstellen vorgesehen.

Eine Mensch-Maschinen-Schnittstelle ist gemäß einer Ausführungsform ein Element ausgewählt aus der folgenden Gruppe von Mensch-Maschinen-Schnittstellen: Tastatur, berührungssensitiver Bildschirm, Maus, Taste, Schalter.

Zum Beispiel ist vorgesehen, dass eine solche Mensch-Maschinen-Schnittstelle am Roboter angeordnet ist.

Ein berührungssensitiver Bildschirm kann gemäß einer Ausführungsform sowohl als Mensch-Maschinen-Schnittstelle vorgesehen sein als auch zum Anzeigen der ermittelten Trajektorie, insbesondere gemeinsam mit der Umgebung des Roboters im Sinne einer erweiterten Realität.

Nach einer Ausführungsform ist das Verfahren gemäß dem ersten Aspekt ein computerimplementiertes Verfahren.

Das Ermitteln der Trajektorie ist gemäß einer Ausführungsform ein computerimplementiertes Ermitteln.

Eine Position im Sinne der Beschreibung, also insbesondere eine Startposition, eine Zielposition und eine Zwischenposition, legt insbesondere eine Raumlage des Roboters und/oder eine Orientierung des Roboters und/oder eine Orientierung eines Greifers des Roboters und/oder eine Orientierung eines Roboterarms fest.

Der Befestigungspunkt des Roboters ist in der Regel fest, außer wenn der Roboterarm auf weiteren bewegten Achsen befestigt wird. In diesem Fall werden diese Achsen Teil der Roboterkinematik mit diesen zusätzlichen Bewegungsachsen. Die Roboterposition kann auf zwei Arten festgelegt werden:
Durch die Positionen aller Gelenkwerte (rotatorisch oder translatorisch) kann die Raumlage des Greifers mit Hilfe der "Vorwärtskinematik" berechnet werden.

Durch die Raumlage des Greifers, also dessen Position und Orientierung, können die Gelenkwerte des Roboters mit Hilfe der "inversen Kinematik" berechnet werden.

Gemäß einer Ausführungsform ist eine Robotersteuerungseinrichtung vorgesehen, welche eingerichtet ist, den Roboter zu steuern, insbesondere eine Bewegung des Roboters zu steuern. Das Steuern des Roboters wird gemäß einer Ausführungsform basierend auf der ermittelten Trajektorie durchgeführt.

Nach einer Ausführungsform umfasst das Verfahren das Anzeigen der ermittelten Trajektorie mittels der Anzeigeeinrichtung.

Nach einer Ausführungsform umfasst das Verfahren das Steuern des Roboters, insbesondere das Steuern basierend auf der ermittelten Trajektorie und der vorgegebenen Maximalgeschwindigkeit.

Der erste Zeitpunkt liegt gemäß einer Ausführungsform vor dem zweiten Zeitpunkt. Gemäß einer Ausführungsform liegt der zweite Zeitpunkt vor dem ersten Zeitpunkt.

Das heißt also, dass beispielsweise vorgesehen ist, dass zunächst die Startposition und dann die Zielposition oder umgekehrt gespeichert werden.

Das heißt also insbesondere, dass der Nutzer gemäß einer Ausführungsform zuerst die Startposition und dann die Zielposition festlegen kann oder umgekehrt.

Gleiches gilt in analoger Weise für das Speichern der Zwischenposition zu dem dritten Zeitpunkt. Der dritte Zeitpunkt kann also insbesondere vor dem ersten Zeitpunkt oder nach dem ersten Zeitpunkt oder vor dem zweiten Zeitpunkt oder nach dem zweiten Zeitpunkt oder zwischen dem ersten Zeitpunkt und dem zweiten Zeitpunkt liegen.

Das heißt also insbesondere, dass zunächst eine Zwischenposition gespeichert werden kann, wobei dann erst die Start- und dann die Zielposition oder umgekehrt gespeichert werden.

Das heißt also, dass ein Nutzer nicht festgelegt ist, welche der Positionen er in welcher Reihenfolge speichern möchte.

Gleiches gilt in analoger Weise für das Empfangen der Umgebungssignale, welche eine Umgebung des Roboters repräsentieren.

Dieser Schritt kann zu einem beliebigen Zeitpunkt durchgeführt werden. Das heißt also beispielsweise, dass zunächst die einzelnen Positionen festgelegt werden, wobei erst dann die Umgebungssignale empfangen werden. Beispielsweise kann auch vorgesehen sein, dass zunächst die Umgebungssignale empfangen werden, wobei erst dann das Festlegen der Positionen erfolgt.

Das heißt also insbesondere, dass der Schritt des Empfangens von Umgebungssignalen zu einem beliebigen Zeitpunkt im Ablauf des Verfahrens durchgeführt werden kann, solange dieser Schritt vor dem Schritt des Ermittelns einer kollisionsfreien Trajektorie des Roboters durchgeführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines ersten Verfahrens zum Ermitteln einer Trajektorie eines Roboters,
- FIG 2: ein Ablaufdiagramm eines zweiten Verfahrens zum Ermitteln einer Trajektorie eines Roboters,
- FIG 3: eine Vorrichtung,
- FIG 4: ein Robotersystem umfassend einen Roboter,
- FIG 5: ein maschinenlesbares Speichermedium und
- FIG 6: der in FIG 4 gezeigte Roboter in einer Startposition und in einer Zielposition
zeigen.

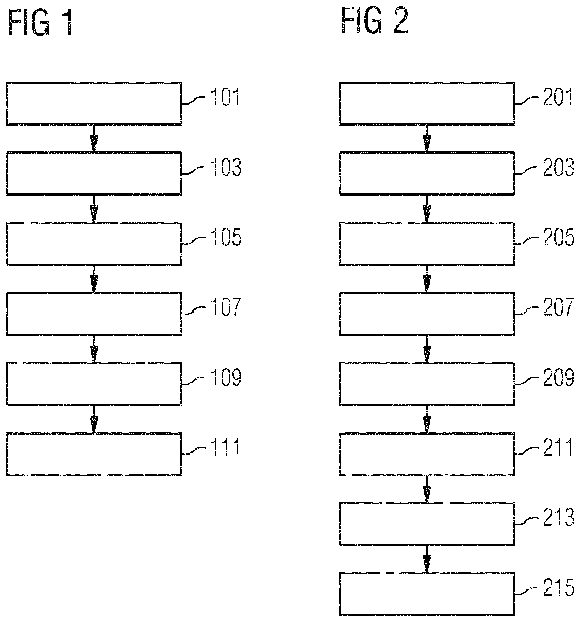

FIG 1 zeigt ein Ablaufdiagramm eines ersten Verfahrens zum Ermitteln einer Trajektorie eines Roboters von einer Startposition zu einer Zielposition.

Das Verfahren umfasst die folgenden Schritte:
Empfangen 101 von ersten Nutzereingabesignalen, welche eine erste Nutzereingabe zu einem ersten Zeitpunkt repräsentieren, dass eine erste momentane Position des Roboters zu dem ersten Zeitpunkt als eine Startposition gespeichert werden soll, Speichern 103 der ersten momentanen Position des Roboters als eine Startposition ansprechend auf das Empfangen der ersten Nutzereingabesignale,
Empfangen 105 von zweiten Nutzereingabesignalen, welche eine zweite Nutzereingabe zu einem zweiten Zeitpunkt, welcher verschieden von dem ersten Zeitpunkt ist, repräsentieren, dass eine zweite momentane Position des Roboters zu dem zweiten Zeitpunkt als eine Zielposition gespeichert werden soll, Speichern 107 der zweiten momentanen Position des Roboters als eine Zielposition ansprechend auf das Empfangen der zweiten Nutzereingabesignale,
Empfangen 109 von Umgebungssignalen, welche eine Umgebung des Roboters repräsentieren, und
Ermitteln 111 einer kollisionsfreien Trajektorie des Roboters von der gespeicherten Startposition zu der gespeicherten Zielposition basierend auf der Umgebung des Roboters.

FIG 2 zeigt ein Ablaufdiagramm eines zweiten Verfahrens zum Ermitteln einer Trajektorie eines Roboters von einer Startposition zu einer Zielposition.

Das Verfahren umfasst die folgenden Schritte:
Empfangen 201 von ersten Nutzereingabesignalen, welche eine erste Nutzereingabe zu einem ersten Zeitpunkt repräsentieren, dass eine erste momentane Position des Roboters zu dem ersten Zeitpunkt als eine Startposition gespeichert werden soll, Speichern 203 der ersten momentanen Position des Roboters als eine Startposition ansprechend auf das Empfangen der ersten Nutzereingabesignale,
Empfangen 205 von zweiten Nutzereingabesignalen, welche eine zweite Nutzereingabe zu einem zweiten Zeitpunkt, welcher verschieden von dem ersten Zeitpunkt ist, repräsentieren, dass eine zweite momentane Position des Roboters zu dem zweiten Zeitpunkt als eine Zielposition gespeichert werden soll, Speichern 207 der zweiten momentanen Position des Roboters als eine Zielposition ansprechend auf das Empfangen der zweiten Nutzereingabesignale,
Empfangen 209 von Umgebungssignalen, welche eine Umgebung des Roboters repräsentieren, und
Ermitteln 211 einer kollisionsfreien Trajektorie des Roboters von der gespeicherten Startposition zu der gespeicherten Zielposition basierend auf der Umgebung des Roboters.

Gemäß einem Schritt 213 ist vorgesehen, dass basierend auf der ermittelten Trajektorie und basierend auf einer vorgegebenen Maximalgeschwindigkeit Robotersignale zum Steuern des Roboters derart erzeugt werden, dass bei einem Steuern des Roboters basierend auf den Robotersteuersignalen der Roboter sich von der Startposition zu der Zielposition entlang der ermittelten Trajektorie mit der vorgegebenen Maximalgeschwindigkeit bewegt.

Das Verfahren umfasst weiter einen Schritt 215 des Ausgebens der erzeugten Robotersteuersignale.

Alternativ oder zusätzlich kann im Schritt 213 vorgesehen sein, basierend auf der ermittelten Trajektorie und basierend auf der Umgebung des Roboters Anzeigesteuersignale derart zu erzeugen, dass bei einem Steuern einer Anzeigeeinrichtung basierend auf den Anzeigesteuersignalen die ermittelte Trajektorie mittels der Anzeigeeinrichtung gemeinsam mit der Umgebung des Roboters angezeigt wird.

Alternativ oder zusätzlich kann im Schritt 215 vorgesehen sein, die erzeugten Anzeigesteuersignale auszugeben.

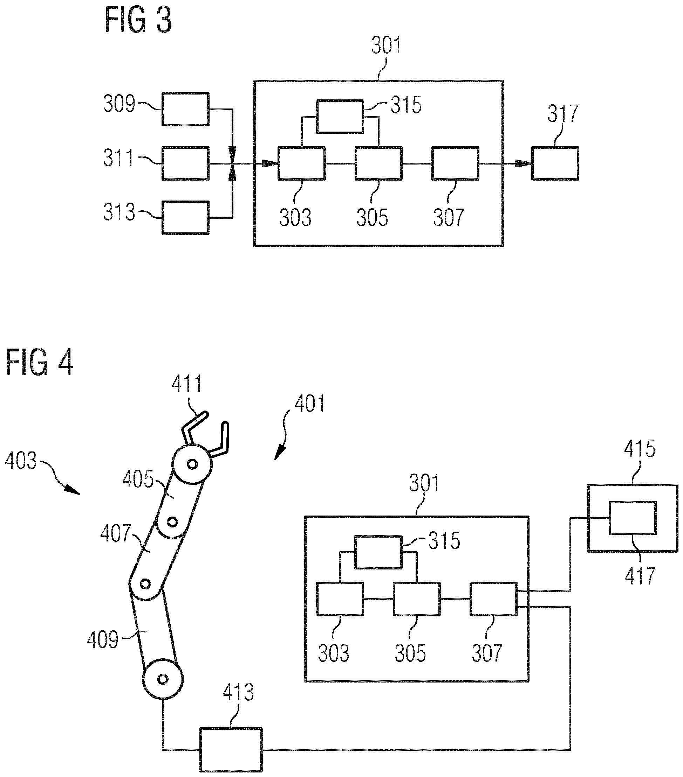

FIG 3 zeigt eine Vorrichtung 301.

Die Vorrichtung 301 ist eingerichtet, alle Schritte des Verfahrens nach dem ersten Aspekt auszuführen.

Die Vorrichtung 301 umfasst einen Eingang 303, einen Prozessor 305 und einen Ausgang 307.

Der Eingang 303 ist eingerichtet, Umgebungssignale 309 zu empfangen, welche eine Umgebung des Roboters repräsentieren.

Der Eingang 303 ist weiter eingerichtet, erste Nutzereingabesignale 311 zu empfangen, welche eine erste Nutzereingabe zu einem ersten Zeitpunkt repräsentieren, dass eine erste momentane Position des Roboters zu dem ersten Zeitpunkt als eine Startposition gespeichert werden soll.

Der Eingang 303 ist weiter eingerichtet, zweite Nutzereingabesignale 313 zu empfangen, welche eine zweite Nutzereingabe zu einem zweiten Zeitpunkt, welcher verschieden von dem ersten Zeitpunkt ist, repräsentieren, dass eine zweite momentane Position des Roboters zu dem zweiten Zeitpunkt als eine Zielposition gespeichert werden soll.

Die Vorrichtung 301 umfasst weiter eine Speichereinrichtung 315, welche eingerichtet ist, die erste momentane Position des Roboters als Startposition zu speichern und welche eingerichtet ist, die zweite momentane Position des Roboters als Zielposition zu speichern.

Die Speichereinrichtung 315 umfasst beispielsweise einen oder mehrere Speicher, beispielsweise elektronische und/oder magnetische Speicher. Beispielsweise umfasst die Speichereinrichtung 315 eine oder mehrere Festplatten und/oder eine oder mehrere SSDs ("Solid State Disk").

Der Prozessor 305 ist eingerichtet, basierend auf der gespeicherten Startposition, basierend auf der gespeicherten Zielposition und basierend auf der Umgebung eine kollisionsfreie Trajektorie des Roboters von der Startposition zu der Zielposition zu ermitteln.

Der Prozessor 305 ist weiter eingerichtet, basierend auf der ermittelten Trajektorie Trajektoriensignale 317 zu erzeugen, welche die ermittelte kollisionsfreie Trajektorie repräsentieren.

Der Ausgang 307 ist eingerichtet, die erzeugten Trajektoriensignale 317 auszugeben.

Beispielsweise ist vorgesehen, dass die erzeugten Trajektoriensignale 317 an eine Robotersteuerungseinrichtung ausgegeben werden, welche basierend auf der ermittelten Trajektorie den Roboter derart steuert, dass sich dieser entlang der kollisionsfreien Trajektorie von der Startposition zu der Zielposition bewegt.

Beispielsweise ist vorgesehen, dass die Trajektoriensignale 317 an eine Anzeigeeinrichtung ausgegeben werden, welche daraufhin die ermittelte Trajektorie anzeigt, insbesondere gemeinsam mit der Umgebung des Roboters anzeigt.

Allgemein ist vorgesehen, dass Signale, welche empfangen werden, mittels des Eingangs 303 empfangen werden. Der Eingang 303 ist also entsprechend eingerichtet, solche Signale zu empfangen.

Signale, welche ausgegeben werden, werden allgemein beispielsweise mittels des Ausgangs 307 ausgegeben. Das heißt also, dass der Ausgang 307 insbesondere eingerichtet ist, solche Signale auszugeben.

Sofern eine Ausführungsform das Speichern einer Zwischenposition vorsieht, ist beispielsweise vorgesehen, die Zwischenposition in der Speichereinrichtung 315 zu speichern.

FIG 4 zeigt ein Robotersystem 401.

Das Robotersystem 401 umfasst die in FIG 3 gezeigte Vorrichtung 301.

Das Robotersystem 401 umfasst weiter einen Roboter 403, welcher einen ersten Roboterarm 405, einen zweiten Roboterarm 407 und einen dritten Roboterarm 409 umfasst. Der erste Roboterarm 405 ist mit dem zweiten Roboterarm 407 gelenkig verbunden. Der zweite Roboterarm 407 ist mit dem dritten Roboterarm 409 gelenkig verbunden.

An dem ersten Roboterarm 405 ist ein Greifer 411 angeordnet.

Das Robotersystem 401 umfasst eine Robotersteuerungseinrichtung 413, welche eingerichtet ist, den Roboter 403 zu steuern, insbesondere eine Bewegung des Roboters 403 zu steuern.

In einer Ausführungsform ist die Robotersteuerungseinrichtung 413 nicht Teil des Robotersystems 401.

Die mittels der Vorrichtung 301 erzeugten Robotersteuersignale werden beispielsweise von der Robotersteuerungseinrichtung 413 dahingehend verwendet, dass diese basierend auf den Robotersteuersignalen eine Bewegung des Roboters 403 von der Startposition zu der Zielposition entlang der ermittelten kollisionsfreien Trajektorie zu steuern.

Das Robotersystem 401 umfasst weiter eine Anzeigeeinrichtung 415, welche einen berührungssensitiven Bildschirm 417 umfasst.

Die mittels der Vorrichtung 301 erzeugten Anzeigesteuersignale werden an den berührungssensitiven Bildschirm 417 ausgegeben, sodass dieser entsprechend die ermittelte Trajektorie gemeinsam mit der Umgebung des Roboters anzeigt.

Ein Nutzer kann über den berührungssensitiven Bildschirm 417 Eingaben vornehmen. Beispielsweise kann der Nutzer über den berührungssensitiven Bildschirm 417 die angezeigte ermittelte Trajektorie bei Bedarf noch anpassen oder ändern.

Beispielsweise ist vorgesehen, dass die erste Nutzereingabe respektive die zweite Nutzereingabe respektive die dritte Nutzereingabe mittels des berührungssensitiven Bildschirms 417 erfasst wird.

In einer Ausführungsform ist vorgesehen, dass die Anzeigeeinrichtung 417 mit dem berührungssensitiven Bildschirm 417 nicht Teil des Robotersystems 401 ist.

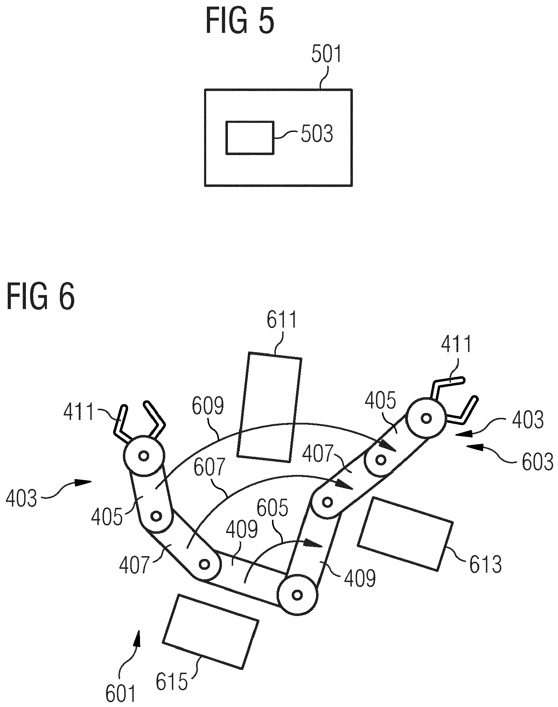

FIG 5 zeigt ein maschinenlesbares Speichermedium 501, auf welchem ein Computerprogramm 503 gespeichert ist.

Das Computerprogramm 503 umfasst Befehle, die bei Ausführung des Computerprogramms 503 durch einen Computer, beispielsweise durch die Vorrichtung 301, diesen veranlassen, ein Verfahren gemäß dem ersten Aspekt auszuführen.

FIG 6 zeigt den Roboter 403 sowohl in einer Startposition 601 als auch in einer Zielposition 603.

Eine Bewegung des dritten Roboterarms 409 von der Startposition 601 in die Zielposition 603 ist symbolisch mittels eines Pfeils mit dem Bezugszeichen 605 dargestellt.

Eine Bewegung des zweiten Roboterarms 407 von der Startposition 601 in die Zielposition 603 ist symbolisch mittels eines Pfeils mit dem Bezugszeichen 607 dargestellt.

Eine Bewegung des ersten Roboterarms 405 von der Startposition 601 in die Zielposition 603 ist symbolisch mittels eines Pfeils mit dem Bezugszeichen 609 dargestellt.

In einer Umgebung des Roboters 403 sind ein erstes Objekt 611, ein zweites Objekt 613, ein drittes Objekt 615 angeordnet.

Das Ermitteln der kollisionsfreien Trajektorie von der Startposition 601 in die Zielposition 603 umfasst insbesondere, dass für jeden der drei Roboterarme 405, 407, 409 eine eigene kollisionsfreie Untertrajektorie ermittelt wird.

Obwohl es so aussieht, dass der erste Roboterarm 405 bei seiner Bewegung von der Startposition 601 in die Zielposition 603 mit dem ersten Objekt 611 kollidieren würde, ist vorgesehen, dass sich der erste Roboterarm 405 um das erste Objekt 601 herumbewegt.

Zusammenfassend betrifft die Erfindung ein Verfahren zum Ermitteln einer Trajektorie eines Roboters von einer Startposition zu einer Zielposition. Die Startposition und die Zielposition werden manuell von einem Nutzer in einer realen Umgebung des Roboters festgelegt. Es erfolgt dann ein Ermitteln einer kollisionsfreien Trajektorie des Roboters von der Startposition zu der Zielposition basierend auf einer Umgebung des Roboters.

Die Erfindung betrifft weiter eine Vorrichtung, ein Robotersystem, ein Computerprogramm sowie ein maschinenlesbares Speichermedium.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Ermitteln einer Trajektorie (605; 607; 609) eines Roboters (403) von einer Startposition (601) zu einer Zielposition (603), umfassend die folgenden Schritte:
Empfangen (101, 201) von ersten Nutzereingabesignalen (311), welche eine erste Nutzereingabe zu einem ersten Zeitpunkt repräsentieren, dass eine erste momentane Position des Roboters (403) zu dem ersten Zeitpunkt als eine Startposition (601) gespeichert werden soll,
Speichern (103, 203) der ersten momentanen Position des Roboters (403) als eine Startposition (601) ansprechend auf das Empfangen der ersten Nutzereingabesignale (311),
Empfangen (105, 205) von zweiten Nutzereingabesignalen (313), welche eine zweite Nutzereingabe zu einem zweiten Zeitpunkt, welcher verschieden von dem ersten Zeitpunkt ist, repräsentieren, dass eine zweite momentane Position des Roboters (403) zu dem zweiten Zeitpunkt als eine Zielposition (603) gespeichert werden soll,
Speichern (107, 207) der zweiten momentanen Position des Roboters (403) als eine Zielposition (603) ansprechend auf das Empfangen der zweiten Nutzereingabesignale (313),
Empfangen (109, 209) von Umgebungssignalen (309), welche eine Umgebung des Roboters (403) repräsentieren, und
Ermitteln (111, 211) einer kollisionsfreien Trajektorie (605; 607; 609) des Roboters (403) von der gespeicherten Startposition (601) zu der gespeicherten Zielposition (603) basierend auf der Umgebung des Roboters (403).

2. Verfahren nach Anspruch 1, wobei dritte Nutzereingabesignale empfangen werden, welche eine dritte Nutzereingabe zu einem dritten Zeitpunkt repräsentieren, dass eine dritte momentane Position des Roboters (403) zu dem dritten Zeitpunkt als eine Zwischenposition gespeichert werden soll, wobei der dritte Zeitpunkt verschieden von dem ersten Zeitpunkt und verschieden von dem zweiten Zeitpunkt ist, wobei die dritte momentane Position des Roboters (403) zu dem dritten Zeitpunkt gespeichert wird ansprechend auf das Empfangen der dritten Nutzereingabesignale, wobei die Trajektorie (605; 607; 609) basierend auf der gespeicherten Zwischenposition derart ermittelt wird, dass die gespeicherte Zwischenposition auf der Trajektorie (605; 607; 609) liegt.

3. Verfahren nach Anspruch 1 oder 2, wobei basierend auf der ermittelten Trajektorie (605; 607; 609) und basierend auf einer vorgegebenen Maximalgeschwindigkeit Robotersteuersignale zum Steuern des Roboters (403) derart erzeugt (213) und ausgegeben (215) werden, dass bei einem Steuern des Roboters (403) basierend auf den Robotersteuersignalen der Roboter (403) sich von der Startposition (601) zu der Zielposition (603) entlang der ermittelten Trajektorie (605; 607; 609) mit der vorgegebenen Maximalgeschwindigkeit bewegt.

4. Verfahren nach einem der vorherigen Ansprüche, wobei basierend auf der ermittelten Trajektorie (605; 607; 609) und basierend auf der Umgebung des Roboters (403) Anzeigesteuersignale derart erzeugt und ausgegeben werden, dass bei einem Steuern einer Anzeigeeinrichtung (415) basierend auf den Anzeigesteuersignalen die ermittelte Trajektorie (605; 607; 609) mittels der Anzeigeeinrichtung (415) gemeinsam mit der Umgebung des Roboters (403) angezeigt wird.

5. Verfahren nach einem der vorherigen Ansprüche, wobei Randbedingungssignale empfangen werden, welche eine Randbedingung für die zu ermittelnde Trajektorie (605; 607; 609) repräsentieren, wobei die Trajektorie (605; 607; 609) basierend auf der Randbedingung ermittelt wird.

6. Verfahren nach Anspruch 5, wobei, wenn keine Trajektorie (605; 607; 609) ermittelt werden kann, welche die Randbedingung erfüllt, die Randbedingung derart angepasst wird, dass eine Trajektorie (605; 607; 609) ermittelt werden kann, welche die angepasste Randbedingung erfüllt, so dass die Trajektorie (605; 607; 609) basierend auf der angepassten Randbedingung ermittelt wird.

7. Verfahren nach einem der vorherigen Ansprüche, wobei mehrere kollisionsfreie Trajektorien (605; 607; 609) ermittelt werden, welche jeweils eine kürzeste Trajektorie (605; 607; 609) und/oder eine schnellste Trajektorie (605; 607; 609) und/oder eine gleichmäßigste Trajektorie (605; 607; 609) von der Startposition (601) zu der Zielposition (603) umfassen.

8. Verfahren nach einem der vorherigen Ansprüche, wobei Roboterparametersignale empfangen werden, welche einen Roboterparameter eines weiteren Roboters (403) in der Umgebung des Roboters (403) repräsentieren, wobei die Trajektorie (605; 607; 609) basierend auf dem Roboterparameter ermittelt wird, wobei der Roboterparameter ein Element ausgewählt aus der folgenden Gruppe von Roboterparametern ist: weitere Startposition (601) einer weiteren Trajektorie (605; 607; 609) des weiteren Roboters (403), weitere Zielposition (603) einer weiteren Trajektorie (605; 607; 609) des weiteren Roboters (403), weitere Trajektorie (605; 607; 609) des weiteren Roboters (403) von einer weiteren Startposition (601) zu einer weiteren Zielposition (603), Abmessung des weiteren Roboters (403), Kontur des weiteren Roboters (403).

9. Vorrichtung (301), die eingerichtet ist, alle Schritte des Verfahrens nach einem der vorherigen Ansprüche auszuführen.

10. Robotersystem (401), umfassend einen Roboter (403) und die Vorrichtung nach Anspruch 9.

11. Computerprogramm (503), umfassend Befehle, die bei Ausführung des Computerprogramms (503) durch einen Computer diesen veranlassen, ein Verfahren gemäß einem der Ansprüche 1 bis 8 auszuführen.

12. Maschinenlesbares Speichermedium (501), auf dem das Computerprogramm (503) nach Anspruch 11 gespeichert ist.
